# EUROPEAN PATENT APPLICATION

(11) **EP 1 164 527 A2**
(43) Date of publication of application: **19.12.2001**
(21) Application number: 01304786.5
(22) Date of filing: 31.05.2001
(51) Int. Cl.: G06F 17/60

(54) **System and method for promotional display verification in EPL systems**

(30) Priority: 06.06.2000 US 587784
(71) Applicant: NCR International, Inc., Dayton, Ohio 45479 (US)
(72) Inventor: Goodwin, John Coker III, Suwanee, GA 30024 (US); Zimmerman, Terry Lee, Lawrenceville, GA 30043 (US)
(74) Representative: Williamson, Brian

(57) **Abstract**

A system and method are disclosed for verifying displays of alternate or promotional messages in EPL systems. A display verification program determines system date and time, and reads first information from a message management file corresponding to a message that is supposed to be displayed on an EPL during the present time period. The program reads second information from an EPL data file, corresponding to a message that is presently displayed on the EPL. If the two pieces of information are different from one another, the program causes a message to be transmitted to the EPL, containing the information from the message management file and a command to display such information.

## Description

The present invention relates to electronic price label (EPL) systems, and more specifically to a system and method for promotional display verification in EPL systems.

Point-of-sale (POS) transaction processing systems typically include a price look-up (PLU) file which contains item identification information and item price information.

EPL systems typically include a plurality of EPLs for merchandise items in a store. EPLs display the price of corresponding merchandise items on store shelves and are typically attached to a rail along the leading edge of the shelves. A store may contain thousands of EPLs to display the prices of the merchandise items. The EPLs are coupled, through a cable or wireless signal connection, to a central server from where information about the EPLs is typically maintained in an EPL data file. Price information displayed by the EPLs is obtained from the PLU file.

To keep the cost of EPLs to a minimum, current EPLs include a limited amount of memory, and typically are used by retailers to display minimal information, such as regular (retail) price and price per unit. However, retailers wish to display ever increasing amounts of alternate information (i.e., other than regular price and unit price). Depending on the retail environment, it may be particularly desirable to display such alternate information as the amount of Value Added Tax (VAT), a "frequent shopper" discounted price, the price in a different currency, product restriction information (for example, restrictions on the sale of alcoholic beverages), government program information (for example, the food stamp program and the women with infant children (WIC) program), or other promotional information applicable to a certain merchandise item.

According to a first aspect of the present invention, there is provided a system for promotional display verification in an electronic price label system comprising:
means for determining system date and time;
means for reading first information from a first data file, corresponding to a message that is supposed to be displayed on an electronic price label during the present time period;
means for reading second information from a second data file, corresponding to a message that is presently displayed on said electronic price label;
means for comparing the first information with the second information; and
means for transmitting a message to the electronic price label, containing the first information and a command to display the first information.

According to a second aspect of the present invention, there is provided a method for promotional display verification in an electronic price label system includes the steps of:
determining system date and time;
reading first information from a first data file, corresponding to a message that is supposed to be displayed on an electronic price label during the present time period;
reading second information from a second data file, corresponding to a message that is presently displayed on said electronic price label;
comparing the first information with the second information; and
if the second information is different from the first information, transmitting a message to the electronic price label, containing the first information and a command to display the first information.

An embodiment of the present invention will now be described, by way of example, with reference to the accompanying drawings, in which:
Fig. 1 is a block diagram of a transaction processing system;
Fig. 2 is a diagram showing data files used within a transaction establishment; and
Fig. 3 is a flow diagram illustrating a method for promotional display verification.

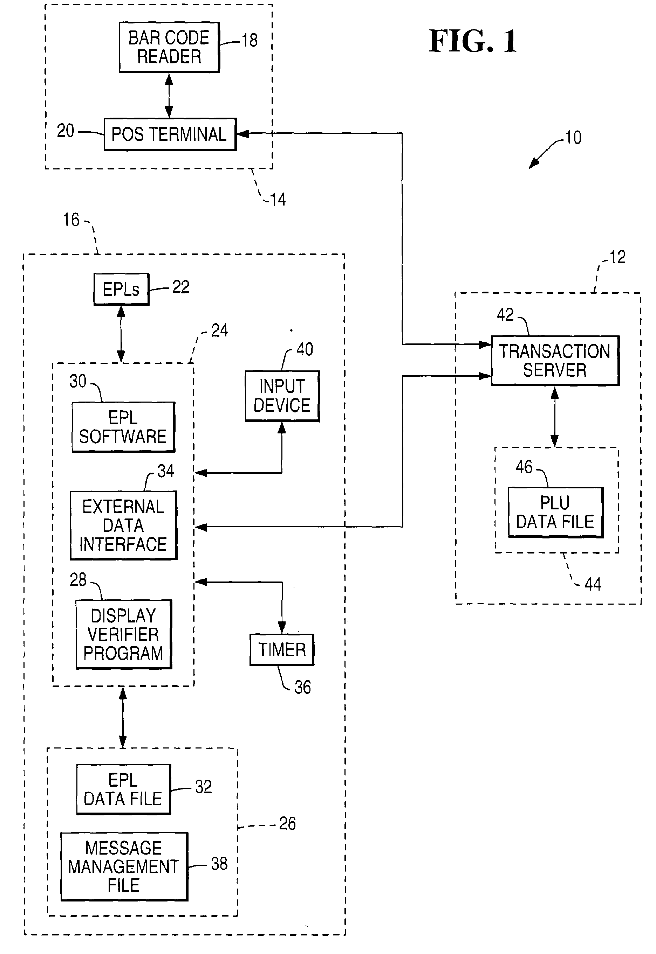

Referring now to Fig. 1, transaction system 10 primarily includes host computer system 12, point-of-sale (POS) system 14, and EPL system 16. Here, components 12 and 14 are shown as separate components that are networked together, but they may also form a single component. Thus, host computer system 12 may be a POS terminal which doubles as a host computer for a network of other POS terminals.

POS system 14 includes bar code reader 18 and POS terminal 20.

EPL system 16 primarily includes EPLs 22, host EPL computer 24, and EPL storage medium 26.

Host EPL computer 24 executes EPL software 30. To assist with execution of certain tasks performed by EPL software 30, EPL computer 24 may include a built-in time keeping device, commonly referred to as a system clock, which is synchronized with current time, in order to automatically execute the tasks at their scheduled times.

EPL communication software 30 is responsible for scheduling and transmitting price data to EPLs 22. EPL software 30 obtains prices in PLU data file 46 as these are entered in input device 40 (immediate processing) or after these have been stored within price look-up (PLU) data file 46 (batch processing).

EPL computer 24 also executes external data interface (EDI) 34. EDI 34 records operator-entered display information and instructions and allows the operator to create messages to EPLs 22. EDI 34 also processes information from any computer-based application that is designed to create messages for EPLs 22. EDI 34 also may be signaled by timer circuits 36 to read information from message management file 38, containing previously stored messages for EPLs 22, and to compare such information with that stored in EPL data file 32. EDI 34 passes messages to EPL software 30 for scheduling and transmission.

EPL computer 24 also executes display verifier program 28. Display verifier program 28 is responsible for verifying that the alternate or promotional message actually displayed by a particular EPL 22 or group thereof during a certain time period is the same as the message stored in message management file 38 for display by the respective EPL(s) during that time period.

EPL storage medium 26 stores EPL data file 32 and message management file 38. EPL storage medium 26 is preferably a fixed disk drive.

EPL data file 32 contains EPL identification and price checksum information. Price checksum information is calculated from price information in PLU data file 46. EPL data file 32 contains current information displayed by EPLs 22.

Message management file 38 includes a table wherein each entry is identified, preferably by the serial number of an individual EPL or by the universal product code (UPC) for a particular item of merchandise, which may correspond to a single EPL or a group thereof. For each entry, message information is provided and, optionally, the date & time for the particular message display to begin and end.

The contents of EPL data file 32 and message management file 38 may be placed in any number of files instead of two files.

Input device 40 is preferably a keyboard.

Host computer system 12 includes PLU storage medium 44 and transaction server 42.

Transaction server 42 handles price requests from POS terminal 20. POS terminal 20 sends item identification information to transaction server 42 and transaction server 42 returns the corresponding price from PLU data file 46.

PLU storage medium 44 stores PLU data file 46. PLU data file 46 is available for distribution to POS terminal 20. Provision may be made for direct access to PLU data file 46 by bar code reader 18.

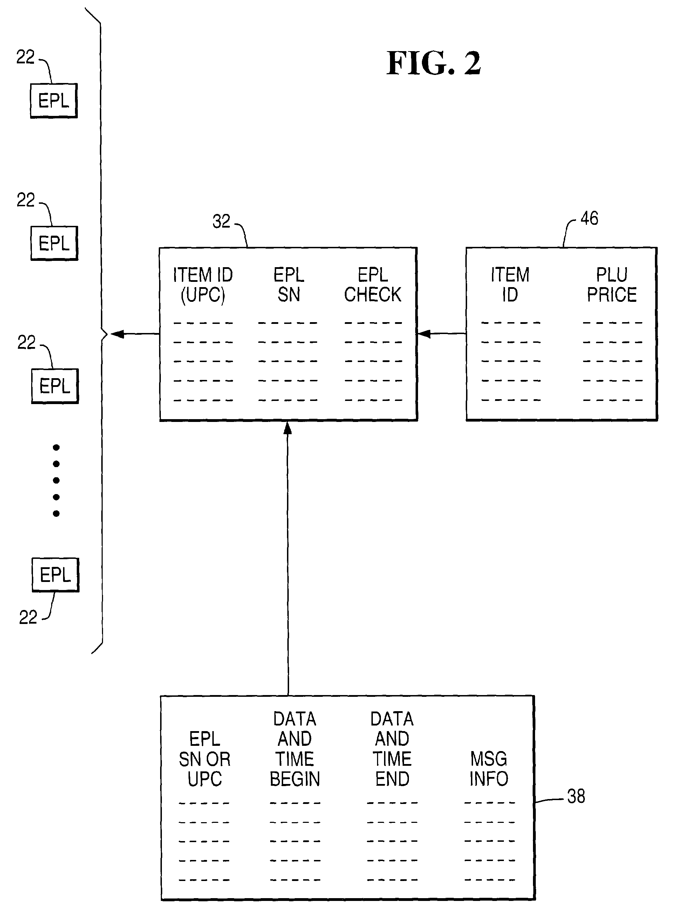

Turning now to Fig. 2, EPL data file 32, message management file 38, and PLU data file 46 are shown in more detail.

EPL data file 32 includes a line entry for each EPL 22 in EPL system 16. Each line entry has an item identification entry (ITEM ID (UPC)), an EPL identification entry (EPL SN), and an EPL price checksum value entry (EPL CHECK).

Entry ITEM ID (UPC) identifies a store item, preferably by its UPC. Entry EPL SN identifies the serial number of each EPL assigned to the item. Entry EPL CHECK is a checksum value of the digits of the price information that is displayed by EPL 22.

Message management file 38 includes a separate record for each EPL serial number or item UPC (EPL SN or UPC). Each record contains message information (MSG INFO) for the particular EPL or merchandise item and, optionally, the respective dates and times for the particular message display to begin (DATE & TIME BEGIN) and end (DATE & TIME END).

PLU data file 46 includes a line entry for each item sold in the transaction establishment. Each line entry has at least an item identification entry (ITEM ID), which preferably is the item's UPC, and a PLU price entry (PLU PRICE).

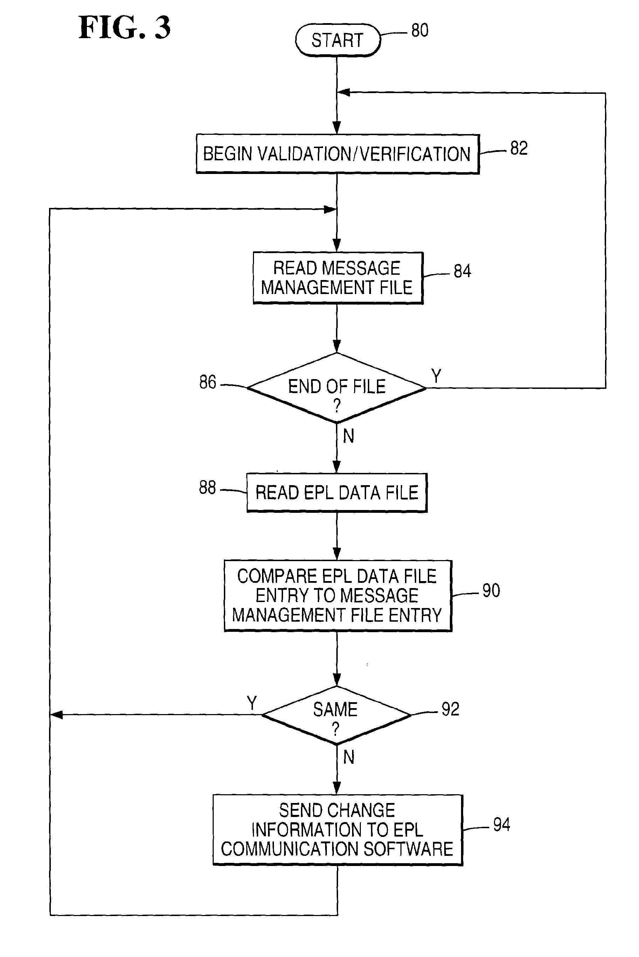

Turning now to Fig. 3, a method for promotional display verification in EPL systems begins with START 80, at which time display verifier program 28 initializes and determines its "sleep" interval, that is, the amount of waiting time between runs.

Step 82 represents the beginning of a run, that is, the beginning of the display validation/verification process.

In step 84, the program reads a line entry in message management file 38, corresponding to the message that is supposed to be displayed during the present time period, either on a particular EPL or subset of the EPLs corresponding to a particular merchandise item (EPL SN), or on all EPLs for such merchandise item (UPC).

In step 86 (END OF FILE), the program determines whether all the line entries in message management file 38 already have been read during this run. If this is the case, the "end of file" has been reached, and the program returns to step 82 to "sleep" before beginning a new run. If the "end of file" has not been reached, operation proceeds to step 88.

In step 88, the program reads the line entry or entries in EPL data file 32 corresponding to the same EPL SN or UPC that was addressed in step 84. The EPL data file line entry indicates the message actually displayed on the target EPL(s) at this time.

In step 90, the program compares the message management file entry read in step 84 with the EPL data file entry read in step 88.

In step 92, the program determines whether the two entries compared in step 90 are the same. If these are the same, operation returns to step 84 to read the next line entry in message management file 38. If these are not the same, operation proceeds to step 94.

In step 94, the program sends the message from message management file 38 to EPL communication software 30, to be broadcast to the target EPL(s) 22. After receiving acknowledgments from the target EPL(s) 22, EPL software 30 also updates EPL data file 32 with the information broadcast to, and now being displayed by, target EPL(s) 22.

After step 94 is completed, operation returns to step 84 to read the next line entry in message management file 38.

Although the present invention has been described with particular reference to certain preferred embodiments thereof, variations and modifications can be effected within the scope of the invention.

## Claims

1. A method for promotional display verification in an electronic price label system, comprising the steps of:
(a) determining system date and time;
(b) reading first information from a first data file, corresponding to a message that is supposed to be displayed on an electronic price label during the present time period;
(c) reading second information from a second data file, corresponding to a message that is presently displayed on said electronic price label;
(d) comparing the first information with the second information; and
(e) if the second information is different from the first information, transmitting a message to the electronic price label, containing the first information and a command to display the first information.

2. A method of claim 1 wherein the first data file is a message management file.

3. A method of claim 2 wherein the second data file is an electronic price label data file.

4. A system for promotional display verification in an electronic price label system, comprising:
means for determining system date and time; means for reading first information from a first data file, corresponding to a message that is supposed to be displayed on an electronic price label during the present time period; means for reading second information from a second data file, corresponding to a message that is presently displayed on said electronic price label; means for comparing the first information with the second information; and
means for transmitting a message to the electronic price label, containing the first information and a command to display the first information.

5. A system as claimed in claim 4 wherein the first data file is a message management file.

6. The system as claimed in claim 4 or claim 5 wherein the second data file is an electronic price label data file.
